# EUROPEAN PATENT APPLICATION

(11) **EP 3 061 341 A1**
(43) Date of publication of application: **31.08.2016**
(21) Application number: 14852198.2
(22) Date of filing: 29.09.2014
(51) Int. Cl.: A01G 31/00, A01G 7/06

(54) **HYDROPONIC CULTURE DEVICE AND HYDROPONIC CULTURE METHOD**

(30) Priority: 08.10.2013 JP 2013211347
(71) Applicant: Panasonic Intellectual Property Management Co., Ltd., Osaka-shi, Osaka 540-6207 (JP)
(72) Inventor: KATO, Sayaka, Osaka-shi Osaka 540-6207 (JP); YANO, Hiroshi, Osaka-shi Osaka 540-6207 (JP); SAKAI, Ayumi, Osaka-shi Osaka 540-6207 (JP)
(74) Representative: Müller-Boré & Partner Patentanwälte PartG mbB
(86) International application number: PCT/JP2014/004960
(87) International publication number: WO 2015/052889

(57) **Abstract**

A hydroponic cultivation apparatus grows a plant (100) by circulating a nutrient solution (110). The hydroponic cultivation apparatus includes: a hydroponic container (1) configured to hold the nutrient solution (100); a support portion (2) configured to support the plant (100); a nutrient solution supply unit (3) configured to supply the nutrient solution (111) to the hydroponic container (1); a nutrient solution discharging unit (5) configured to discharge the nutrient solution (110) from the hydroponic container (1); and a budding enhancer supply unit (4) configured to supply a budding enhancer (112) to the plant (100). Thereby, the hydroponic cultivation apparatus makes the plant (100) produce a bud.

## Description

### TECHNICAL FIELD

The present invention relates to a hydroponic cultivation apparatus for, and a hydroponic cultivation method of, growing a plant.

### BACKGROUND ART

Some perennial plants enter dormant phases. For this reason, there is likelihood that some perennial plants need long growth periods unique to them to be grown. Meanwhile, techniques for shortening plant growth periods have been disclosed in PTLS 1 and 2.

A plant growth method disclosed in PTL 1 supplies a plant vitalizer including organic compounds to a stem of the plant while a plant is growing. Thereby, the plant growth method shortens a growth period of the plant by accelerating the growth of the plant.

A plant growth method disclosed in PTL 2 shortens the dormant phase of the plant by genetically modifying the plant.

### CITATION LIST

### PATENT LITERATURE

[PTL 1] Japanese Unexamined Patent Application Publication No.2007-195546
[PTL 2] Japanese Unexamined Patent Application Publication No.2005-229823

### SUMMARY OF INVENTION

### TECHNICAL PROBLEM

Nevertheless, the plant growth method disclosed in PTL 1 only accelerates the growth of the plant in the plant growth process. For this reason, this plant growth method cannot shorten the dormant phase of a perennial plant.

Meanwhile, a plant grown using the plant growth method disclosed in PTL 2 is genetically different from a plant of the same kind and has a problem if it is used as a food plant or a medical plant.

The present invention has been proposed with the foregoing situations taken into consideration. An object of the present invention is to provide a hydroponic cultivation apparatus and a hydroponic cultivation method which are capable of shortening a dormant phase of a plant without genetically modifying the plant.

### SOLUTION TO PROBLEM

A first aspect of the present invention provides a hydroponic cultivation apparatus for growing a plant by circulating a nutrient solution, including: a hydroponic container configured to hold the nutrient solution; a support portion configured to support the plant; a nutrient solution supply unit configured to supply the nutrient solution to the hydroponic container; a nutrient solution discharging unit configured to discharge the nutrient solution from the hydroponic container; and a budding enhancer supply unit configured to supply a budding enhancer to the plant.

A second aspect of the present invention provides the hydroponic cultivation apparatus according to the first aspect, in which the budding enhancer supply unit supplies the budding enhancer to a bud of the plant.

A third aspect of the present invention provides the hydroponic cultivation apparatus according to the second aspect, in which the budding enhancer supply unit drops the budding enhancer onto the bud.

A fourth aspect of the present invention provides the hydroponic cultivation apparatus according to the second aspect, in which the budding enhancer supply unit is a member containing the budding enhancer.

A fifth aspect of the present invention provides the hydroponic cultivation apparatus according to the fourth aspect, further including a height adjuster configured to adjust a height of the budding enhancer supply unit.

A sixth aspect of the present invention provides the hydroponic cultivation apparatus according to the first aspect, in which the budding enhancer supply unit is configured to contain the budding enhancer in at least a part of the support portion which is in contact with the plant.

A seventh aspect of the present invention provides the hydroponic cultivation apparatus according to the fourth aspect, in which the member containing the budding enhancer is placed on the support portion, and includes a hole provided above a part of support portion in which the plant produces the bud.

An eighth aspect of the present invention provides the hydroponic cultivation apparatus according to the first or second aspect, wherein the budding enhancer supply unit sprays the budding enhancer onto the plant.

A ninth aspect of the present invention provides the hydroponic cultivation apparatus according to any one of the first to the eighth aspect, in which the budding enhancer includes a plant hormone.

A tenth aspect of the present invention provides a hydroponic cultivation method of growing a plant by circulating a nutrient solution, wherein during a dormant phase in which a perennial plant as the plant is in dormancy, the perennial plant is supplied with not only the nutrient solution but also a budding enhancer.

An eleventh aspect of the present invention provides the hydroponic cultivation method according to the tenth aspect, in which the budding enhancer includes a plant hormone.

### ADVANTAGEOUS EFFECTS OF INVENTION

The present invention is capable of shortening a dormant phase of a plant by supplying a budding enhancer to a plant without genetically modifying the plant.

### BRIEF DESCRIPTION OF DRAWINGS

[Fig. 1]

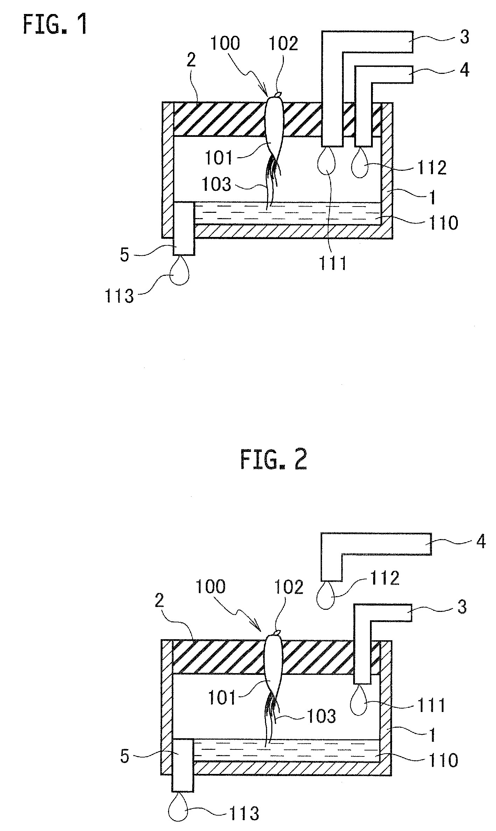

   Fig. 1 is a partial cross-sectional diagram illustrating an example of a configuration of a hydroponic cultivation apparatus shown as an embodiment of the present invention.
[Fig. 2]
   Fig. 2 is a partial cross-sectional diagram illustrating an example of a configuration of another hydroponic cultivation apparatus shown as the embodiment of the present invention.
[Fig. 3]

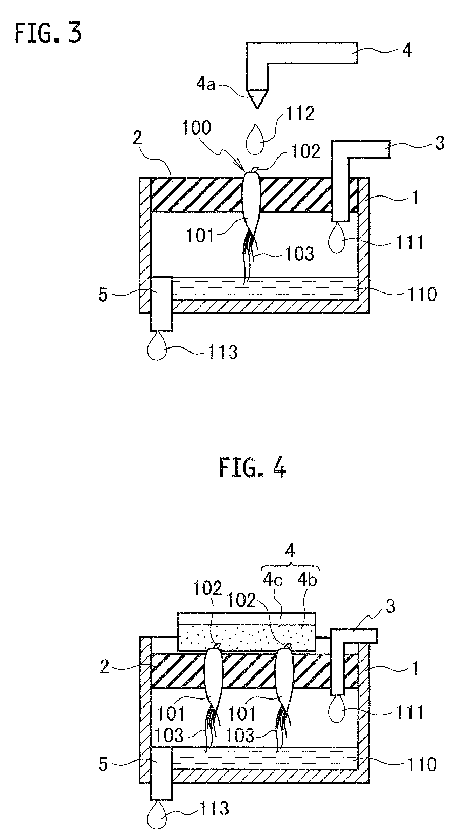

   Fig. 3 is a partial cross-sectional diagram illustrating an example of a configuration of another hydroponic cultivation apparatus shown as the embodiment of the present invention.
[Fig. 4]
   Fig. 4 is a partial cross-sectional diagram illustrating an example of a configuration of another hydroponic cultivation apparatus shown as the embodiment of the present invention.
[Fig. 5]

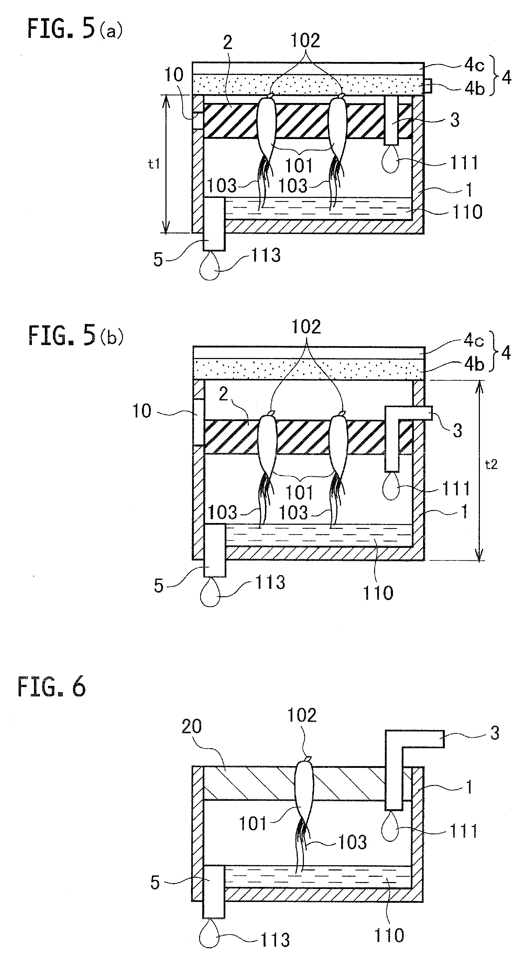

   Fig. 5 is a partial cross-sectional diagram illustrating an example of a configuration of another hydroponic cultivation apparatus shown as the embodiment of the present invention.
[Fig. 6]
   Fig. 6 is a partial cross-sectional diagram illustrating an example of a configuration of another hydroponic cultivation apparatus shown as the embodiment of the present invention.
[Fig. 7]

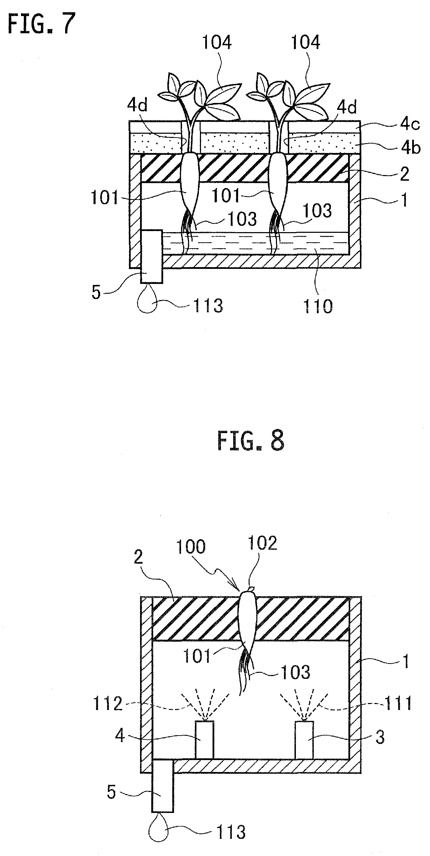

   Fig. 7 is a partial cross-sectional diagram illustrating an example of a configuration of another hydroponic cultivation apparatus shown as the embodiment of the present invention.
[Fig. 8]
   Fig. 8 is a partial cross-sectional diagram illustrating an example of a configuration of another hydroponic cultivation apparatus shown as the embodiment of the present invention.

### [Description of Embodiments]

Referring to the drawings, descriptions will be hereinbelow provided for the embodiment of the present invention.

A hydroponic cultivation apparatus shown as an embodiment of the present invention has a configuration as shown in Fig. 1, for example. This hydroponic cultivation apparatus is used for hydroponic culture in which a plant 100 is grown without soil. Incidentally, although Fig. 1 shows the single plant 100 is being grown by the hydroponic cultivation apparatus, several or a large number of plants 100 may be grown by the hydroponic cultivation apparatus.

The hydroponic cultivation apparatus grows the plant 100 by supplying liquids to at least branch roots 103 of the plant 100. The hydroponic cultivation apparatus shown as the embodiment will be explained in which the plant 100 is a plant synthesizing nutrients in its aboveground part and accumulating the thus-synthesized nutrients in its underground part, that to say, a root vegetable.

A cited example of the root vegetable is Panax ginseng (Korean ginseng, Goryeo insam) as the plant 100 shown in Fig. 1. Although the embodiment shows, for example, Panax ginseng as the plant 100, the plant 100 is not limited to this.

In addition, the plant 100 of the embodiment may be a perennial plant that takes several years to grow. This perennial plant grows through a repeated series of a growth phase in which the plant grows bigger accumulating nutrient and a dormant phase in which the plant growth is suspended. The dormant phase is that needed for the plant to survive the winter in a farm field.

Furthermore, the embodiment will be described in which a nutrient solution is circulated to help the plant 100 to grow during the growth phase of the plant 100. Cited examples of the nutrient solution include water, and a culture solution obtained by adding nutrients to water.

The hydroponic cultivation apparatus includes a hydroponic container 1. The hydroponic container 1 is that configured to grow the plant 100. The hydroponic container 1 holds a nutrient solution 110 in its bottom portion. The hydroponic container 1 of the hydroponic cultivation apparatus is provided with a support portion 2 for supporting a taproot 101 of the plant 100. The hydroponic cultivation apparatus applies water to the branch roots 103 of the plant 100 with the plant 100 supported thereby.

The support portion 2 is attached to an opening portion in an upper end of the hydroponic container 1, and supports the plant 100. The support portion 2 is made from a sponge or the like which is provided to and closes the opening portion in the upper end of the hydroponic container 1.

The support portion 2 is formed to include a through-hole for the plant 100. The support portion 2 is elastically deformed in accordance with a change in the shape of a side surface of the plant 100 when the plant 100 grows, and supports the plant 100 with resilience from the elastic deformation. Incidentally, any configuration may be used for the support portion 2, as long as the configuration is capable of supporting the plant 100, such as a cord suspending the aboveground part of the plant 100.

An upper end of the taproot 101 is exposed to the outside from the support portion 2 while the plant 100 is being supported by the support portion 2. A bud 102 grows from the upper end of the taproot 101.

In some perennial plants, when they enter dormancy, leaves and stems in their aboveground parts wither. After the end of dormancy, the plant 100 produces the bud 102. Nevertheless, the hydroponic cultivation apparatus of the embodiment makes the plant 100 produce the bud 102 by supplying a budding enhancer to the plant 100 in order to prevent the plant 100 from entering dormancy, as described later.

The hydroponic cultivation apparatus includes a nutrient solution supply unit 3. The nutrient solution supply unit 3 is formed from a pipe through which to supply the nutrient solution, which is held in a nutrient solution container, albeit not illustrated. The nutrient solution supply unit 3 penetrates through the support portion 2 from above to below. The nutrient solution supply unit 3 is provided with a nutrient solution supply port under the support portion 2. The nutrient solution supply unit 3 drops a nutrient solution 111, which is supplied from the nutrient solution container, into the hydroponic container 1.

The hydroponic cultivation apparatus further includes a nutrient solution discharging unit 5. The nutrient solution discharging unit 5 discharges the nutrient solution 110 from the hydroponic container 1. The nutrient solution discharging unit 5 is formed from a pipe provided with an upper opening for the nutrient solution 2 to flow in at a predetermined height in the hydroponic container 1, for example. After the amount of nutrient solution 110 reaches the predetermined height, part of the solution 110 above the height can be discharged as a waste solution 113 from the upper opening of the nutrient solution discharging unit 5. Thereby, the hydroponic cultivation apparatus circulates the nutrient solution 110 stored inside the hydroponic container 1.

The hydroponic cultivation apparatus further includes a budding enhancer supply unit 4. The budding enhancer supply unit 4 is formed from a pipe through which to supply the budding enhancer, which is held in a budding enhancer container, albeit not illustrated, using a pump or the like. The budding enhancer supply unit 4 penetrates through the support portion 2 from above to below the support portion 2. The budding enhancer supply unit 4 is provided with a budding enhancer supply port under the support portion 2. The budding enhancer supply unit 4 drops a budding enhancer 112, which is supplied from the budding enhancer container using the pump or the like, into the hydroponic container 1.

Thereby, the budding enhancer 112 is mixed into the nutrient solution 110 held in the hydroponic container 1. Thereby, the budding enhancer is supplied to the branch roots 103 of the plant 100.

The budding enhancer 112 includes plant hormones. As the plant hormones, at least either a gibberellin or kinetin is usable. The plant hormones act on the plant 100 to break dormancy of the plant 100. In other words, the supply of the budding enhancer 112 to the plant 100, while dormant, makes the plant 100 produce the bud 102.

Moreover, it is desirable that the budding enhancer supply unit 4 be configured to supply the budding enhancer 112 at arbitrary timing. To this end, the hydroponic cultivation apparatus is provided with the budding enhancer supply unit 4 as a channel separated from the nutrient solution supply unit 3.

It should be noted that the budding enhancer 112 may be supplied to the plant 100 at least during the dormant phase in which the plant 100 is dormant. Furthermore, the budding enhancer 112 may be supplied to the plant 100, too, during the growth phase in which the plant 100 is not dormant.

Moreover, with regard to a method of supplying the budding enhancer 112, the budding enhancer 112 may be directly supplied to the bud 102 which grows newly. Otherwise, the budding enhancer 112 may be temporarily mixed into the nutrient solution 111 so that the budding enhancer 112 can be absorbed by the branch roots 103. Meanwhile, an appropriate concentration of the budding enhancer 112 may be changed depending on the method of supplying the budding enhancer 112, as well as the size and growth level of the plant 100 to which the budding enhancer 112 is given. For example, in a case where a gibberellin is used as the budding enhancer 112, approximately 0.01 ppm to 1000 ppm of the budding enhancer 112 may be given to the plant 100 depending on the size and growth level of the plant 100.

It is desirable that the concentrations of the plant hormones as the budding enhancer 112 in the nutrient solution 110 be set appropriately. Moreover, it is desirable that the plant hormones as the budding enhancer 112 be supplied to an appropriate part of the plant 100. Thereby, physiological disorder of the plant 100 can be inhibited.

Besides, even if the budding enhancer 112 is mixed into the nutrient solution 110 unintentionally inside the hydroponic container 1, the mixture cause no problem to the growth of the nutrient solution 110.

As described above, the hydroponic cultivation apparatus described as the embodiment grows the plant 100 by circulating the nutrient solution 110. The hydroponic cultivation apparatus includes the hydroponic container 1 in which to hold the nutrient solution 110 for growing the plant 100. The hydroponic cultivation apparatus further includes the support portion 2 for supporting the plant 100. The hydroponic cultivation apparatus further includes the nutrient solution supply unit 3 for supplying the nutrient solution 111 to the hydroponic container 1. The hydroponic cultivation apparatus further includes the nutrient solution discharging unit 5 for discharging the nutrient solution 110 from the hydroponic container 1. The hydroponic cultivation apparatus further includes the budding enhancer supply unit 4 for supplying the budding enhancer 112 to the plant 100.

Moreover, the embodiment makes it possible to carry out the hydroponic cultivation method in which the plant 100 is grown by circulating the nutrient solution 110. In addition, the hydroponic cultivation method supplies both the nutrient solution 111 and the budding enhancer 112 to the perennial plant as the plant 100 during the dormant phase in which the perennial plant is dormant.

The hydroponic cultivation apparatus like this is capable of giving the budding enhancer 112 to the plant 100 using the budding enhancer supply unit 4. Thereby, even if the plant 100 is dormant, the hydroponic cultivation apparatus is capable of growing the plant 100 by arbitrarily making the plant 100 cause budbreak. Accordingly, the hydroponic cultivation apparatus is capable of shortening the dormant phase of the plant 100 without genetically modifying the plant 100.

Furthermore, the hydroponic cultivation apparatus is capable of making the plant 100 grow faster by giving the budding enhancer 112 to the plant 100 than by giving no budding enhancer 112 to the plant 100.

Moreover, in a case where the hydroponic cultivation apparatus grows a large number of plants 100, the hydroponic cultivation apparatus is capable of inhibiting variations in budbreak timing among the plants 100. For example, the hydroponic cultivation apparatus is capable of supplying the budding enhancer to plants 100 which have not produced their buds yet, while the hydroponic cultivation apparatus is capable of stopping the supply of the budding enhancer to plants 100 which have already produced their buds.

Besides, since the hydroponic cultivation apparatus shortens the dormant phase of the plant 100, the plant 100 need not be genetically modified. The plant 100 grown by the hydroponic cultivation apparatus is not genetically different from the plant 100 naturally grown.

What is more, the hydroponic cultivation apparatus uses the plant hormones as the budding enhancer. The plant hormones are naturally included within the plant 100. For this reason, the hydroponic cultivation apparatus is capable of reducing a chance of abnormal morphologies occurring in the plant 100, even if it is grown with the budding enhancer.

Next, descriptions will be provided for another embodiment of the present invention. In the following embodiment, components which are the same as those of the foregoing embodiment will be denoted by the same reference signs, and detailed descriptions for such components will be omitted.

As shown in Fig. 2, a hydroponic cultivation apparatus shown as the embodiment of the present invention may be configured such that a budding enhancer supply unit 4 supplies a budding enhancer 112 to a bud 102 of a plant 100.

The plant 100 produces a new bud 102 after entering dormancy and letting its aboveground part wither. With this taken into consideration, the hydroponic cultivation apparatus supplies a budding enhancer 112 directly to a part of the plant 100 from which the bud 102 grows, or the new bud 102.

The plant 100 can absorb the budding enhancer 112, which is supplied from the budding enhancer supply unit 4, from the bud 102. Thereby, the plant 100 can make the bud 102 grow faster.

The hydroponic cultivation apparatus is capable of making a time period leading to the budbreak become shorter than one in which the budding enhancer 112 is absorbed from branch roots 103. Furthermore, the hydroponic cultivation apparatus can make the plant 100 less likely to form abnormal morphologies.

It should be noted that the hydroponic cultivation apparatus may be configured such that the budding enhancer supply unit 4 supplies the budding enhancer 112 to a nutrient solution 110 as shown in Fig. 1, as well as to the bud 102.

As another embodiment of the present invention, for example, a budding enhancer 112 may be dropped onto a bud 102 of a plant 100, as shown in Fig. 3. A budding enhancer supply unit 4 has a drip nozzle 4a at a distal end of a pipe through which to supply the budding enhancer 112.

This hydroponic cultivation apparatus is configured such that a position at which the budding enhancer supply unit 4 supplies the budding enhancer 112 can be moved in accordance with a position of the bud 102 of the plant 100. Otherwise, the hydroponic cultivation apparatus adjusts a position of the plant 100 to be grown to a placement position of the drip nozzle 4a. A position from which the budding enhancer 112 drips is placed right above the bud 102 so that the budding enhancer supply unit 4 drops the budding enhancer 112 directly onto the bud 102.

The budding enhancer supply unit 4 may drop the budding enhancer 112 onto the bud 102 of the plant 100 only at needed times while the plant 100 is in dormancy. After the plant 100 enters dormancy, the budding enhancer supply unit 4 drops a predetermined amount of budding enhancer 112 at predetermined intervals which are set in advance.

This hydroponic cultivation apparatus supplies the budding enhancer 112 directly to the bud 102. For this reason, the hydroponic cultivation apparatus enables the plant 100 to form the bud 102 even if the concentration of the budding enhancer 112 is set low.

In addition, this hydroponic cultivation apparatus is capable of inhibiting unnecessary absorption of the budding enhancer 112. Thereby, despite the use of the budding enhancer 112, the hydroponic cultivation apparatus can make the plant 100 less likely to form abnormal morphologies.

Furthermore, in the case where this hydroponic cultivation apparatus grows multiple plants 100, the hydroponic cultivation apparatus is capable of selecting plants 100 onto which the budding enhancer 112 should be dropped. Thereby, the hydroponic cultivation apparatus is capable of selectively making the plants 100 form their buds 102.

As another embodiment of the present invention, for example, a budding enhancer supply unit 4 may be formed from a member (4b, 4c) containing a budding enhancer, as shown in Fig. 4. This member may be made from a water-absorbent material. This budding enhancer supply unit 4 is placed, for example, on an upper surface of a support portion 2. Thereby, the budding enhancer supply unit 4 makes the member containing the budding enhancer stay in contact with buds 102.

The member made from sponge or the like may be used as the budding enhancer supply unit 4. In a case where sponge is used as the budding enhancer supply unit 4, the lower portion 4b absorbing the budding enhancer in the budding enhancer supply unit 4 is in contact with the buds 102. Thereby, the budding enhancer supply unit 4 is capable of supplying the budding enhancer directly to the buds 102.

In the case where sponge or the like is used as the budding enhancer supply unit 4, the sponge or the like is placed on new buds 102 which broke several hours ago to several days ago. Incidentally, the hydroponic cultivation apparatus may be configured such that the budding enhancer supply unit 4 is refilled with the budding enhancer from the upper portion 4c of the sponge. Furthermore, in a case where a brush or the like is used as the budding enhancer supply unit 4, the budding enhancer can be applied to the buds 102 using the brush or the like by making the brush or the like reciprocate while sliding the brush or the like over the buds 102.

Even in the case where a brush-like member or the like is used as the member containing the budding enhancer, the budding enhancer is held by the tip of the brush-like member or the like by being supplied to the brush-like member or the like through a budding enhancer container and a pipe, for example. Thereafter, the tip of the brush-like member or the like is brought into contact with the buds 102. Thereby, the budding enhancer supply unit 4 is capable of supplying the budding enhancer 112 directly to the buds 102.

Since the thus-configured hydroponic cultivation apparatus uses the member containing the budding enhancer as the budding enhancer supply unit 4, the hydroponic cultivation apparatus is capable of supplying the budding enhancer to the multiple buds 102 evenly at the same time. For this reason, the plants 100 can be grown industrially using the hydroponic cultivation apparatus.

A hydroponic cultivation apparatus as another embodiment of the present invention may be the hydroponic cultivation apparatus shown in Fig. 4, which as shown in Figs. 5(a) and 5(b), includes a height adjuster 10 for adjusting the height of the budding enhancer supply unit 4.

The height adjuster 10 changes the height of the budding enhancer supply unit 4 manually or automatically. The height adjuster 10 is capable of arbitrarily selecting times and timing at which a budding enhancer is supplied to buds 102.

For each period for which the budding enhancer is supplied to the buds 102, the height adjuster 10 adjusts a height t1 of the budding enhancer supply unit 4, as shown in Fig. 5(a), in order to bring the budding enhancer supply unit 4 into contact with the buds 102. On the other hand, for each period for which the budding enhancer is not supplied to the buds 102, the height adjuster 10 adjusts a height t2 of the budding enhancer supply unit 4, as shown in Fig. 5(b), in order not to bring the budding enhancer supply unit 4 into contact with the buds 102.

Since this hydroponic cultivation apparatus adjusts the height of the budding enhancer supply unit 4 using the height adjuster 10, the hydroponic cultivation apparatus is capable of supplying the budding enhancer to the buds 102 only at needed times.

A hydroponic cultivation apparatus as another embodiment of the present invention may be configured such that as shown in Fig. 6, a budding enhancer supply unit 4 contains a budding enhancer in at least a part of a support portion 20 which is in contact with a plant 100.

In this hydroponic cultivation apparatus, a water-absorbent material such as sponge is selected for the support portion 20. Thereby, the hydroponic cultivation apparatus allows the budding enhancer to be contained in the support portion 20. In addition, the part of the support portion 20 which contains the budding enhancer may be the entirety of the support portion 20, or a specific part surrounding the plant 100.

This hydroponic cultivation apparatus supports a side surface of the plant 100 using the support portion 20. The supply of the budding enhancer to the support portion 20 with the plant 100 supported using the support portion 20 means that the budding enhancer can be supplied to a taproot 101 of the plant 100. Incidentally, the hydroponic cultivation apparatus may be refilled with the budding enhancer from above the support portion 20 at arbitrary timing.

The thus-configured hydroponic cultivation apparatus does not supply the budding enhancer directly to a bud 102. Furthermore, unlike in the cases described using Figs. 4, 5(a) and 5(b), the member containing the budding enhancer will not be brought into contact with the bud 102. For this reason, in this hydroponic cultivation apparatus, the configuration for supplying the budding enhancer will not be an obstacle to a new bud which the plant 100 produces.

In a hydroponic cultivation apparatus as another embodiment of the present invention, it is desirable that as shown in Fig. 7, the member containing a budding enhancer be placed on a support portion 2, and include hole portions 4d provided above parts of plants 100 where the plants 100 produce buds 102.

In this hydroponic cultivation apparatus, a lower portion 4b of the member containing the budding enhancer is in contact with the support portion 2. The hydroponic cultivation apparatus may be configured such that the support portion 2 absorbs the budding enhancer from the lower portion 4b of the member containing the budding enhancer, and gives the budding enhancer to taproots 101 of the plants 100. In addition, the lower portion 4b of the member containing the budding enhancer may take on a shape which allows the lower portion 4b to continue in contact with the growing plants 100.

In this hydroponic cultivation apparatus, the hole portions 4d may be provided to the member containing the budding enhancer at its parts where the buds 102 are expected to grow, in order for the member containing the budding enhancer not to hinder the buds 102 which grow from the plants 100 entering dormancy. For example, the hole portions 4d may be like cuts which is as small as several millimeters.

In the thus-configured hydroponic cultivation apparatus, it is inside the hole portions 4d where the buds 102 break, as well as leaves and stems 104 grow from the buds 102. For this reason, in this hydroponic cultivation apparatus, the member containing the budding enhancer does not hinder the budbreak of the plants 100. Nor does the hydroponic cultivation apparatus hinder the plants 100 from producing the buds 102, or their aboveground parts from growing. Meanwhile, this hydroponic cultivation apparatus is capable of easily switching between the supply of the budding enhancer and the suspension of the supply of the budding enhancer.

A hydroponic cultivation apparatus as another embodiment of the present invention may be configured such that as shown in Fig. 8, a budding enhancer 112 in spray is supplied a plant 100. The hydroponic cultivation apparatus includes: a nutrient solution supply unit 3 for spraying a nutrient solution 111; and a budding enhancer supply unit 4 for spraying the budding enhancer 112.

The nutrient solution supply unit 3 is connected to a nutrient solution supply pipe, albeit not illustrated. The nutrient solution supply unit 3 sprays the nutrient solution 111, which is supplied from the nutrient solution supply pipe, in the form of mist from a nozzle. The thus-sprayed nutrient solution 111 is attached to a taproot 101 and branch roots 103 of the plant 100. Thereby, the nutrient solution supply unit 3 is capable of supplying the nutrient solution 111 to the plant 100.

The budding enhancer supply unit 4 is connected to a pipe, albeit not illustrated. The budding enhancer supply unit 4 sprays the budding enhancer 112, which is supplied from the pipe, from a nozzle. The thus-sprayed budding enhancer 112 is attached to the taproot 101 and the branch roots 103 of the plant 100. Thereby, the budding enhancer supply unit 4 is capable of supplying the budding enhancer 112 to the plant 100.

It should be noted that a method of spraying the nutrient solution 111 and the budding enhancer 112 may be arbitrary. Cited examples of the spraying method include a spraying method using a high-pressure gas, and an ultrasonic mist method. Furthermore, it is desirable that timing at which the nutrient solution 111 and the budding enhancer 112 are sprayed, and amounts of nutrient solution 111 and budding enhancer 112 to be sprayed be adjusted arbitrarily.

In addition, the position at which the budding enhancer 112 is supplied by the hydroponic cultivation apparatus is not limited to one which is shown in Fig. 8. The budding enhancer 112 maybe sprayed from above the taproot 101.

Moreover, the hydroponic cultivation apparatus may be configured such that only the budding enhancer 112 is supplied in the form of mist while the nutrient solution 111 is supplied using another method such as the foregoing subirrigation method.

The hydroponic cultivation apparatus enables the budding enhancer 112 to be absorbed into all the branch roots 103 of the plant 100 evenly, since the budding enhancer 112 in the form of mist is supplied to the plant 100.

It should be noted that the foregoing embodiments are examples of the embodiment. For this reason, the present invention is not limited to the foregoing embodiments. It is a matter of course that besides these embodiments, various modifications can be made depending of designs and the like within a scope not departing from the technical ideas of the present invention. In addition, this application claims priority based in Japanese Patent Application No. 2013-211347 filed on October 8, 2013, and all the contents of the Japanese application are incorporated herein.

### REFERENCE SIGNS LIST

- 1: hydroponic container
- 2: support portion
- 3: nutrient solution supply unit
- 4: budding enhancer supply unit
- 4a: drip nozzle
- 4d: hole portions
- 5: nutrient solution discharging unit
- 10: height adjuster
- 100: plant
- 101: taproot
- 102: bud
- 110, 111: nutrient solution
- 112: budding enhancer

## Claims

1. A hydroponic cultivation apparatus for growing a plant by circulating a nutrient solution, comprising:
a hydroponic container configured to hold the nutrient solution;
a support portion configured to support the plant;
a nutrient solution supply unit configured to supply the nutrient solution to the hydroponic container;
a nutrient solution discharging unit configured to discharge the nutrient solution from the hydroponic container; and
a budding enhancer supply unit configured to supply a budding enhancer to the plant.

2. The hydroponic cultivation apparatus according to claim 1, wherein the budding enhancer supply unit supplies the budding enhancer to a bud of the plant.

3. The hydroponic cultivation apparatus according to claim 2, wherein the budding enhancer supply unit drops the budding enhancer onto the bud.

4. The hydroponic cultivation apparatus according to claim 2, wherein the budding enhancer supply unit is a member containing the budding enhancer.

5. The hydroponic cultivation apparatus according to claim 4, further comprising a height adjuster configured to adjust a height of the budding enhancer supply unit.

6. The hydroponic cultivation apparatus according to claim 1, wherein the budding enhancer supply unit is configured to contain the budding enhancer in at least a part of the support portion which is in contact with the plant.

7. The hydroponic cultivation apparatus according to claim 4, wherein the member containing the budding enhancer is placed on the support portion, and includes a hole provided above a part of support portion in which the plant produces the bud.

8. The hydroponic cultivation apparatus according to claim 1 or 2, wherein the budding enhancer supply unit sprays the budding enhancer onto the plant.

9. The hydroponic cultivation apparatus according to any one of claims 1 to 8, wherein the budding enhancer includes a plant hormone.

10. A hydroponic cultivation method of growing a plant by circulating a nutrient solution, wherein during a dormant phase in which a perennial plant as the plant is in dormancy, the perennial plant is supplied with not only the nutrient solution but also a budding enhancer.

11. The hydroponic cultivation method according to claim 11, wherein the budding enhancer includes a plant hormone.
